(19) Europäisches Patentamt
European Patent Office
Office européen des brevets

(11) Veröffentlichungsnummer: **0 136 528 B1**

# (12) EUROPÄISCHE PATENTSCHRIFT

(45) Veröffentlichungstag der Patentschrift: **24.07.91**

(51) Int. Cl.[5]: **C08G 73/10**, C08G 73/14

(21) Anmeldenummer: **84110172.8**

(22) Anmeldetag: **27.08.84**

Die Akte enthält technische Angaben, die nach dem Eingang der Anmeldung eingereicht wurden und die nicht in dieser Patentschrift enthalten sind.

## (54) Verfahren zur Herstellung von Polyamidiminen und deren verwendung.

(30) Priorität: **06.09.83 DE 3332031**

(43) Veröffentlichungstag der Anmeldung:
**10.04.85 Patentblatt 85/15**

(45) Bekanntmachung des Hinweises auf die Patenterteilung:
**24.07.91 Patentblatt 91/30**

(84) Benannte Vertragsstaaten:
**CH DE FR GB IT LI**

(56) Entgegenhaltungen:
**EP-A- 0 104 417**
**DE-A- 2 542 706**
**DE-A- 2 947 117**
**DE-A- 3 240 934**
**DE-B- 1 770 202**
**DE-B- 1 956 512**
**FR-A- 2 503 171**

(73) Patentinhaber: **BAYER AG**
**W-5090 Leverkusen 1 Bayerwerk(DE)**

(72) Erfinder: **Zecher, Wilfried, Dr.**
**Treptowerstrasse 6**
**W-5090 Leverkusen 1(DE)**
Erfinder: **Dhein, Rolf, Dr.**
**Deswatinesstrasse 30**
**W-4150 Krefeld 1(DE)**
Erfinder: **Reinking, Klaus, Dr.**
**Robert-Stolz-Strasse 16b**
**W-5632 Wermelskirchen 1(DE)**

EP 0 136 528 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft die Herstellung bzw. Verwendung von Polyamidimiden mit thermoplastischen Eigenshaften.

Es ist bekannt, daß aliphatisch-aromatische Polyamidimide, hergestellt aus der Umsetzung von Polyisocyanaten mit cyclischen Polycarbonsäureanhydriden und Lactamen (DAS 1 770 202) oder Polyamiden (DAS 1 956 512) besondere Eigenschaften wie hohe Erweichungstemperaturen und gute Elastizitätswerte besitzen und als hochtemperaturbeständige Beschichtungen, z.B. auf dem Elektroisolierlack-Sektor, Verwendung finden können.

Es wurde nun gefunden, daß die Polymere, die bei der Kondensation von organischen Polyisocyanaten wie aliphatischen, aliphatisch-aromatischen und aromatischen Diisocyanaten mit cyclischen Polycarbonsäureanhydriden und Lactamen und/oder Polyamiden bei Temperaturen von O - 400 °C und in einem Lösungsmittel erhalten werden, Thermoplaste mit ausgezeichneten Eigenschaften sind und im Spritzguß verarbeitet werden können.

Es wurde weiterhin gefunden, daß diese Polymere z.B. in Lösungsmitteln hergestellt und dann in einem Eindampfextruder bei Temperaturen von 250 - 400 °C, gegebenenfalls unter Vakuum, aufkonzentriert werden können. Eine besondere Ausführungsform für die erfindungsgemäße Verwendung dieser Polyamidimide besteht darin, daß Polymere verwendet werden, bei deren Herstellung als Isocyanat-Komponente ein Gemisch aus 40 - 95 Gew.-% eines aromatischen Diisocyanats und 5 - 60 Gew.-% eines aliphatischen Diisocyanats eingesetzt wurde.

Gegenstand der Erfindung ist ein Verfahren zur Herstellung von Kresol-löslichen Polyamidimiden aus Polyisocyanaten, cyclischen Polycarbonsäureanhydriden, Lactamen und/oder Polyamiden, dadurch gekennzeichnet, daß die Polyamidimide in einer ersten Stufe nach einem bekannten Verfahren in einem Lösungsmittel hergestellt und dann in einem Eindampfextruder bei Temperaturen von 240 bis 400 °C, gegebenenfalls unter Vakuum, aufkonzentriert und auskondensiert werden, mit der Maßgabe, daß die Herstellung oder Aufarbeitung nicht in Gegenwart von 0,2 bis 15 Gew.-% eines oder eines Gemisches einfach oder mehrfach mit Alkyl-Resten mit 1 bis 20 C-Atomen und/oder mit Cycloalkyl-Resten und/oder mit Aryl-Resten mit 6 bis 12 C-Atomen substituierter Phenole erfolgt, wobei bei alleinigem Vorliegen von Alkyl-Sustituenten diese insgesamt mindestens 2 C-Atome haben müssen und mit der Maßgabe, daß Polymere, die 0,1 bis 20 Gew.-% eines Lactams oder deren Mischungen der Formel

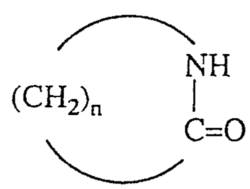

in der n für eine ganze Zahl von 4 bis 18 steht, enthalten, ausgenommen sind.

Die erfindungsgemäß hergestellten Polyamidimide zeichnen sich durch gute mechanische Werte wie Schlagzähigkeit, Zugfestigkeit, E-Moduli und Wärmeformbeständigkeit aus. Es ist überraschend, daß sie bei den hohen Temperaturen, die für das Extrudieren und den Spritzguß von Polyimiden notwendig sind, verarbeitbar sind.

Im allgemeinen können bei Imiden für diesen Anwendungsbereich als Imino-Komponente nur thermisch sehr stabile Reste wie z.B. 4,4'-substituierte Diphenylether eingesetzt werden. Es ist weiterhin überraschend, daß die erfindungsgemäß hergesellten Polymere unter diesen Bedingungen, insbesondere bei der Aufkonzentration im Extruder, nicht verspröden und unschmelzbar werden, wie dies bei Reaktionsprodukten aus Polyisocyanaten und cyclischen Polycarbonsäureanhydriden beobachtet werden kann.

Für die erfindungsgemäße Herstellung der Polyamidimide können vorzugsweise Polyisocyanate eingesetzt werden, wie sie beispielsweise in der DE-OS 1 770 202 beschrieben sind.

Besonders bevorzugt werden phosgenierte Kondensate aus Anilin und Formaldehyd mit Polyphenylenmethylen-strukturen, technische Gemische aus Toluylendiisocyanaten, m-Phenylen-diisocyanat und symmetrische Verbindungen wie 4,4'-Diisocyanato-diphenylmethan, 4,4'-Diisocyanatodiphenylether, Naphtylen-(1,5)-diisocyanat, p-Phenylendiisocyanat, 4,4'-Diisocyanato-diphenyl-dimethylmethan, analoge hydro-aromatische Diisocyanate wie 4,4'-Diisocyanato-dicyclohexylmethansowie aliphatische Diisocyanate mit 2 - 12-C-Atomen wie Hexamethylendiisocyanat und von Isophoron abgeleitete Diisocyanate.

Eine besondere Ausführungsform besteht in der Verwendung von Gemischen aus 40 - 95 Gew.-%

eines aromatischen Diisocyanats, z.B. 4,4-Diisocyanato-diphenylmethan oder 2,4- oder 2,6-Toluylendiisocyanat und 5 - 60 Gew.-% eines aliphatischen Diisocyanats, z.B. 4,4'-Diisocyanato-dicyclohexylmethan, Isophoron-diisocyanat, Hexamethylendiisocyanat und Trimethyl-hexamethylendiisocyanat.

Anstelle der Isocyanate können auch Verbindungen eingesetzt werden, die unter den Reaktionsbedingungen als Isocyanate reagieren, vorzugsweise die Additionsverbindungen von Alkoholen, Phenolen und Lactamen, z.B. von Phenol, technischen Kresolgemischen und Caprolactam oder von Gemischen aus den den Isocyanaten entsprechenden Aminen und aliphatischen und aromatischen Kohlensäureestern, z.B. Kohlensäurediethylester, Kohlensäurediphenylester und Ethylencarbonat, die auch bereits partiell miteinander umgesetzt sein können, oder auch Polycarbodiimide und Isocyanato-isocyanurate aus den beschriebenen Polyisocyanaten.

Zur Regulierung des Molekulargewichts können auch monofunktionelle Isocyanate wie z.B. Phenylisocyanat, Tolylisocyanat, Cyclohexylisocyanat, Stearylisocyanat,ω,ω,ω-Trifluorethylisocyanat und 3,5-Trifluormethyl-phenylisocyanat oder die entsprechenden Amine eingesetzt werden.

Zur erfindungsgemäßen Herstellung der Polyamidimiden können cyclische Polycarbonsäureanhydride verwendet werden, wie sie in DE-OS 1 770 202 und DE-OS 2 542 706 beschrieben werden, vorzugsweise Polycarbonsäureanhydride der allgemeinen Formel (I)

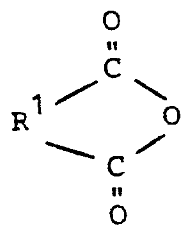

(I),

in welcher

$R^1$ einen gegebenenfalls substituierten aliphatischen $c_2$-$C_{20}$-Rest, cycloaliphatischen $C_5$-$C_{10}$-Rest, einen aliphatisch-aromatischen Rest mit 1 bis 10 C-Atomen im aliphatischen Teil und 6 bis 10 C-Atomen im aromatischen Teil oder einen aromatischen Rest mit 6 bis 10 C-Atomen bedeutet, der neben der cyclischen Anhydridgruppe mindestens noch eine weitere cyclische Anhydridgruppe oder eine Carboxylgruppe trägt,

bedeutet.

Als Beispiele seien Butantetracarbonsäuredianhydrid, Cyclopentantetracarbonsäuredianhydrid, Pyromellitsäuredianhydrid, Benzophenontetracarbonsäuredianhydrid und besonders bevorzugt Trimellitsäureanhydrid aufgeführt.

Anstelle der Carbonsäureanhydride können auch Derivate wie die Alkylester oder Phenylester oder die Polycarbonsäuren selbst eingesetzt werden, die im Verlauf der Reaktion in die Säureanhydride übergehen.

Zur Regulierung des Molekulargewichts werden unter den Reaktionsbedingungen monofunktionell reagierende Carbonsäuren wie z.B. Phthalsäure oder deren Anhydrid, Benzoesäure oder Palmitinsäure eingesetzt, die weiterhin mit Alkyl oder Halogen wie Fluor oder Chlor substituiert sein können.

Zur erfindungsgemäßen Herstellung der Polyamidimide werden Lactame, beispielsweise solche der Formel (II)

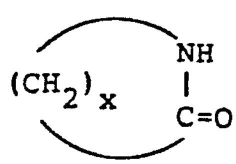

(II),

in welcher x eine ganze Zahl von 2 bis 20 bedeutet,

eingesetzt.

Vorzugsweise wird Caprolactam eingesetzt.

Anstelle oder in Kombination mit den Lactamen können Polyamide eingesetzt werden, wie sie in DAS 1 956 512 beschrieben werden, z.B. Polycapronamid (Nylon 6), Polydodecansäureamid und Polyamide aus Dicarbonsäuren wie z.B. Adipinsäure, Sebacinsäure, Oxalsäure, Dibutylmalonsäure, Isophthalsäure und Terephthalsäure und Diaminen wie Ethylendiamin, Hexamethylendiamin, Decamethylendiaminen und m-

und p-Phenylendiamin. Bevorzugt verwendet werden Polycapronamid (Nylon 6) und Polyhexamethylenadipamid (Nylon 66).

Die erfindungsgemäßen Herstellung der Polyamidimide kann in Lösungsmitteln erfolgen, wie dies in DAS 1 770 202 beschrieben wird. Bevorzugt werden als Lösungsmittel Phenole wie Phenol und technische Gemische aus o-, m- und p-Kresolen verwendet.

Zur erfindungsgemäßen Herstellung der Polyamidimide werden die Reaktionskomponenten mit Lösungsmittel einige Minuten bis zu mehreren Stunden bei Temperaturen von O - 400−C gehalten. Der Verlauf der Reaktion läßt sich beispielsweise über die Gasentwicklung, den Anstieg der Viskosität und die IR-Spektren verfolgen.

Als besonders geeignet haben sich erfindungsgemäße Polyamidimide mit einer relativen Viskosität, gemessen an einer 1 %-igen Lösung in Kresol bei 25 °C, von 1,5 bis 3,0, vorzugsweise von 1,7 bis 2,6 mPas erwiesen.

Es ist zuweilen vorteilhaft, die Herstellungsreaktion in mehreren Stufen durchzuführen oder die einzelnen Komponenten in unterschiedlicher Reihenfolge oder bei verschiedenen Temperaturen zuzugeben. So kann das Polymere in einem phenolischen Lösungsmittel hergestellt, dann aus der Lösung mit einem Nichtlöser wie z.B. Methanol gefällt und auf einem Extruder nachkondensiert werden.

In einer besonderen Ausführungsform wird beispielsweise bei der Herstellung des Polymeren in einen phenolischem Lösungsmittel (z.B. Phenol/technisches Kresol-Gemisch) nach der Polymerisation die Reaktionslösung für zusätzlich 0,5 bis 10 Stunden, vorzugsweise 1 bis 6 Stunden bei einer Temperatur von 200 bis 250 °C, vorzugsweise 210 bis 220 °C, gehalten.

Diese Temperaturen können durch partielle Verdampfung des Lösungsmittels oder durch Anwendung von Druck bis zu etwa 5 bar erreicht werden.

Eine bevorzugte Ausführungsform besteht darin, das Polymere in einem Lösungsmittel herzustellen, gegebenenfalls bereits im Kessel zu einer noch fließfähigen Lösung oder einem Schmelzharz aufzukonzentrieren und den restlichen Konzentrationsvorgang unter Nachkondensation in einem Eindampfextruder unter Vakuum oder Stickstoff bei Temperaturen von 240 - 400 °C, vorzugsweise von 280 - 340 °C, auszuführen.

Im allgemeinen werden pro Val Isocyanat ein Val Carbonsäure oder cyclisches Carbonsäureanhydrid und pro Val Carbonsäureanhydrid 0,5 - 2 Val Lactam oder Polyamid zur Umsetzung gebracht, doch sind auch weitgehende Abweichungen von diesen Mengenverhältnissen möglich.

Eine weitere mögliche Ausführungsform besteht darin, überschüssiges Isocyanat mit Di- oder Tricarbonsäuren, z.B. Adipinsäure, Terephtalsäure, Isophthalsäure oder Trimesinsäure und überschüssige Carbonsäure mit polyfunktionellen Alkoholen, wie z.B. Ethylenglykol, Neopentylglykol, Hexandiol, Trimethylolpropan, Trishydroxyethylisocyanurat, Trishydroxyethylurazol und Polyestern mit endständigen Hydroxygruppen zur Reaktion zu bringen.

Die erfindungsgemäße Herstellung der Polymeren kann durch Katalysatoren beeinflußt werden, z.B. durch Amine wie Triethylamin, 1,4-Diazobicyclo-(2,2,2)-octan, N-Ethylmorpholin, N-Methylimidazol und 2-Methylimidazol, durch anorganische und organische Metallverbindungen, insbesondere Verbindungen des Eisens, Bleis, Zinks, Zinns, Kupfers, Kobalts und Titans wie Eisen (III)-chlorid, Kobaltacetat, Bleioxid, Bleiacetat, Zinnoctoat, Dibutylzinn-dilaurat, Kupferacetylacetonat, Titantetrabutylat, Alkali-phenolate und Natriumcyanid und durch Phosphorverbindungen wie Trialkylphosphin und Methylphospholinoxid.

Die erfindungsgemäß hergestellten Thermoplaste zeichen sich durch besondere Zugfestigkeit, E-Moduli und Wärmeformbeständigkeit aus. Ihre Eigenschaften können für die verschiedenen Anwendungsgebiete durch Änderung der stöchiometrischen Verhältnisse, des Kondensationsgrades und durch Zumischung von nieder- und hochmolekularen Komponenten wie Füllstoffen, Pigmenten, Alterungsschutzmitteln, Gleitmitteln, Weichmachern und weiteren Polymeren variiert werden.

Vergleichsbeispiel A

In 415 g Phenol/Kresol (1:1) werden 123,8 g 4,4'-Diisocyanato-diphenylmethan, 1,2 g Phenylisocyanat und 96 g Trimellitsäureanhydrid eingetragen und 2 Stunden bei 170 °C, 2 Stunden bei 190 °C und 4 Stunden bei 200 °C gerührt. Die Kondensation erfolgt unter Abspaltung von Kohlendioxid. Dann werden im Vakuum 265 g des Lösungsmittelgemisches abdestilliert und der Rückstand noch eine Stunde bei 215 °C nachkondensiert. Man erhält das Polyamidimid als trübes, sprödes Harz mit einem Festgehalt von 75 Gew.-%.

Eine Probe des Harzes wird im Stickstoffstrom bei 250 - 300 °C eingedampft. Das Harz geht in eine krümelige Masse über, die sich auch bei höheren Temperaturen nicht klar aufschmelzen läßt.

Vergleichsbeispiel B

In 415 g N-Methylpyrrolidon werden 96 g Trimellitsäureanhydrid, 123,8 g 4,4'-Diisocyanato-diphenylmethan und 1,2 g Phenylisocyanat gelöst und unter Rühren in 4 Stunden bei 80 °C, 4 Stunden bei 120 °C und 2 Stunden bei 130 °C zum Polyamidimid kondensiert. Die Reaktion verläuft unter Abspaltung von Kohlendioxid. Man erhält das Polyamidimid als hellbraune klare Lösung mit einem Festgehalt von ca. 30 Gew.-%. Die Viskosität $\eta^{25}$ beträgt 4700 mPas.

Eine Probe der so hergestellten Polyamidimid-Lösung wird zuerst bei 250 °C und dann bei 300 °C im Stickstoffstrom eingedampft. Das Polymere backt an der Wandung an und ist in Kresol und Dimethylformamid nicht mehr lösbar.

Beispiel 1

In eine Lösung von 226 g Caprolactam in 920 g Kresol werden bei 120 °C 445 g 4,4'-Diisocyanatodiphenylmethan, 348 g eines Gemisches aus 80 % 2,4- und 20 % 2,6-Toluylendiisocyanat, 4,76 g Phenylisocyanat und 384 g Trimellitsäureanhydrid eingetragen. Die Kondensation zum Polyamidimid wird unter Rühren in 2 Stunden bei 170 °C, 2 Stunden bei 190 °C und 4 Stunden bei 205 °C ausgeführt. Dann wird mit 1200 g Kresol auf einen Festgehalt von 30 Gew.-% verdünnt. Die Viskosität $\eta^{25}$ einer Probe dieser Lösung, die mit Kresol weiter auf einen Festgehalt von 15 Gew.-% verdünnt wurde, beträgt 350 mPas.

100 g dieser Lösung werden unter Stickstoff zuerst bei 250 und dann bei 300 °C eingedampft. Man erhält ein transparentes elastisches Harz mit der relativen Viskosität $\eta$ = 1,86, gemessen bei 25 °C an einer 1 %-igen Lösung in Kresol.

Beispiel 2

In 200 g Kresol werden 33,9 g Polycapronamid (Nylon 6) gelöst, dann werden 100 g 4,4'-Diisocyanatodiphenylmethan, 17,4 g 2,4-Toluylendiisocyanat und 96 g Trimellitsäureanhydrid eingetragen. Das Reaktionsgemisch wird 2 Stunden bei 170 °C, 4 Stunden bei 190 °C und 4 Stunden bei 205 °C gerührt. Anschließend wird mit 400 g Kresol auf einen Festgehalt von ca. 25 Gew.-% verdünnt. Die Viskosität des Kondensationsproduktes $\eta^{25}$ beträgt, gemessen an einer 15 %-igen Lösung in Kresol, 800 mPas.

Die Lösung des Polyamidimids wird im Verhältnis 1:10 in Methanol eingetropft. Man erhält ein gelbes Pulver, das bei 320 °C zu einem klaren Harz aufgeschmolzen wird.

Beispiel 3

In 3750 g Phenol/Kresol (1:1) werden 950 g Caprolactam gelöst, dann werden bei 120 - 130 °C 1000 g 4,4'-Diisocyanatodiphenylmethan, 1048 g 4,4'-Diisocyanatodicyclohexylmethan und 1536 g Trimellitsäureanhydrid eingetragen. Die Temperatur wird unter Rühren auf 170 °C gesteigert und dann 2 Stunden bei 170 °C, 2 Stunden bei 190 °C und 4 Stunden bei 200 °C gehalten. Die Kondensation erfolgt unter Abspaltung von Kohlendioxid. Anschließend werden unter leichtem Vakuum 2800 g des Lösungsmittels abdestilliert und der Rückstand 1 Stunde auf 210 °C erhitzt. Beim Erkalten erhält man ein sprödes Harz mit einem Festgehalt von ca. 80 Gew.-%, das mit einer Schneidmühle zerkleinert wird. Die Viskosität $\eta^{25}$ einer 15 %-igen Lösung in Kresol beträgt 1020 mPas.

Das so hergestellte Harz wird in einen Welding-Eindampfextruder bei einer maximalen Manteltemperatur von 320 °C und einem Druck von 130 mbar aufkonzentriert. Man erhält ein transparentes Harz mit einer relativen Viskosität, gemessen an einer 1 %-igen Lösung in Kresol bei 25 °C, von 2,18.

Die Verarbeitung im Spritzgußverfahren bei Temperaturen um 300 °C ergibt Prüfkörper mit einer Schlagzähigkeit von 68 kJ/m², einer Reißfestigkeit von 81 mPa, einem Zug-E-Modul von 3380 MPa und einer Vicat-Erweichungstemperatur von 178 °C.

Beispiel 4

In 185 g Kresol/Phenol (1:1) und 56,6 Caprolactam werden bei 120 °C 100 g 4,4'-Diisocyanatodiphenylmethan, 16,8 g Hexamethylendiisocyanat und 96 g Trimellitsäureanhydrid eingetragen. Die Kondensation zum Polyamidimid wird unter Rühren in 2 Stunden bei 170 °C, 2 Stunden bei 180 °C und 4 Stunden bei 205 °C ausgeführt. Dann werden unter Vakuum 110 g des Lösungsmittelgemisches abdestilliert und der Rückstand noch eine Stunde bei 215 °C nachkondensiert. Man erhält das Polyamidimid als braunes Harz mit einem Festgehalt von 75 Gew.-%. Die Viskosität $\eta^{25}$ einer 15 %-igen Lösung des Harzes in Kresol beträgt 650 mPas.

Eine Probe des Harzes zuerst bei 250 °C und dann bei 300 °C im Stickstoffstrom eingedampft. Man

erhält ein transparentes schmelzbares Harz mit einer relativen Viskosität $\eta$ = 2,1.

Beispiel 5

In eine Lösung von 226 g Caprolactam in 770 g Phenol/Kresol (1:1) werden bei 120°C 247 g 4,4'-Disiocyanatodiphenylmethan, 262 g 4,4'-Diisocyanato-dicyclohexylmethan, 2,38 g Phenylisocyanat und 348 g Trimellitsäureanhydrid eingetragen. Dann wird 2 Stunden bei 170°C, 2 Stunden bei 190°C und 4 Stunden bei 205°C gerührt. Anschließend werden unter Vakuum 530 g des Lösungsmittelgemisches abdestilliert und der Rückstand noch 1 Stunde auf 215°C erhitzt. Man erhält das Polyamidimid als braunes sprödes Harz mit einem Festgehalt von ca. 80 Gew.-%. Die Viskosität $\eta^{25}$ einer 15 %-igen Lösung in Kresol beträgt 860 mPas.

Das so hergestellte Harz wird zerkleinert und in einem ZSK-Eindampfextruder bei einer maximalen Manteltemperatur von 320°C und einem Druck von 400 mbar aufkonzentriert. Man erhält ein transparentes elastisches Harz mit einer relativen Viskosität, gemessen an einer 1 %-igen Lösung in Kresol, von $\eta$ = 2,1.

Beispiel 6

In 460 g Phenol/Kresol (1:1) werden 113 g Caprolactam und dann bei 120°C 200 g 4,4'-Diisocyanatodiphenylmethan, 44,4 g Isophorondiisocyanat und 192 g Trimellitsäureanhydrid eingetragen. Danach wird die Temperatur gesteigert und 2 Stunden bei 170°C, 2 Stunden bei 190°C und 4 Stunden bei 200°C gerührt. Anschließend werden 310 g des Lösungsmittelsgemisches abdestilliert. Dann wird noch eine Stunde bei 215°C nachkondensiert. Das Polyamidimid wird als sprödes braunes Harz mit einem Festgehalt von ca. 75 Gew.-% erhalten. Die Viskosität $\eta^{25}$ einer 15 %-igen Lösung in Kresol beträgt 660 mPas.

Eine Probe des Harzes wird zuerst bei 250°C und dann bei 300°C im Stickstoffstrom eingedampft. Man erhält ein schmelzbares und transparentes elastisches Harz mit der relativen Viskosität $\eta$ = 2,0.

**Patentansprüche**

1. Verfahren zur Herstellung von Kresol-löslichen Polyamidimiden aus Polyisocyanaten, cyclischen Polycarbonsäureanhydriden, Lactamen und/oder Polyamiden, dadurch gekennzeichnet, daß die Polyamidimide in einer ersten Stufe nach einem bekannten Verfahren in einem Lösungsmittel hergestellt und dann in einem Eindampfextruder bei Temperaturen von 240 bis 400 unter Vakuum oder Stickstoff, aufkonzentriert und auskondensiert werden, mit der Maßgabe, daß die Herstellung oder Aufarbeitung nicht in Gegenwart von 0,2 bis 15 Gew.-% eines oder eines Gemisches einfach oder mehrfach mit Alkyl-Resten mit 1 bis 20 C-Atomen und/oder mit Cycloalkyl-Resten und/oder mit Aryl-Resten mit 6 bis 12 C-Atomen substituierter Phenole erfolgt, wobei bei alleinigem Vorliegen von Alkyl-Sustituenten diese insgesamt mindestens 2 C-Atome haben müssen und mit der Maßgabe, daß Polymere, die 0,1 bis 20 Gew.-% eines Lactams oder deren Mischungen der Formel

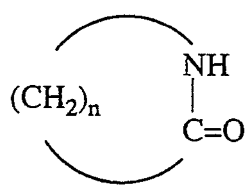

in der n für eine ganze Zahl von 4 bis 18 steht, enthalten, ausgenommen sind.

2. Verfahren nach Anspruch 1, dadurch gekennzeichnet, daß als Polycarbonsäureanhydrid Trimellitsäureanhydrid verwendet wird.

3. Verfahren nach Anspruch 1, dadurch gekennzeichnet, daß als Polyisocyanate Gemische aus 40 - 95 Gew.-% eines aromatischen Diisocyanats und 5 - 60 Gew.-% eines aliphatischen Diisocyanats eingesetzt werden.

4. Verfahren nach Anspruch 1, dadurch gekennzeichnet, daß bei der Herstellung der Polymeren in einem phenolischen Lösungsmittel nach der Polymerisation die Reaktionslösung für zusätzlich 0,5 bis 10

Stunden bei einer Temperatur von 200 bis 250 °C gehalten wird.

5. Verwendung der nach Anspruch 1 hergestellten Polyamidimide für Spritzguß und Extrusion.

## Claims

1. A process for the production of cresol-soluble polyamideimides from polyisocyanates, cyclic polycarboxylic anhydrides, lactams and/or polyamides, characterized in that, in a first step, the polyamideimides are prepared in a solvent by a known method and are then concentrated in vacuo or under nitrogen in an evaporation extruder at temperatures in the range from 240 to 400 °C and condensed to completion, with the proviso that preparation or working up does not take place in the presence of 0.2 to 15% by weight of phenols substituted one or more times by $C_{1-20}$ alkyl radicals and/or by cycloalkyl radicals and/or by $C_{6-12}$ aryl radicals or a mixture of such phenols and, if alkyl substituents only are present, they must contain a total of at least 2 carbon atoms and with the proviso that polymers containing 0.1 to 20% by weight of a lactam corresponding to the formula

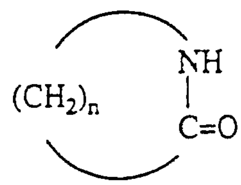

in which n is an integer of 4 to 18,
or mixtures thereof are excluded.

2. A process as claimed in claim 1, characterized in that trimellitic anhydride is used as the polycarboxylic anhydride.

3. A process as claimed in claim 1, characterized in that mixtures of 40 to 95% by weight of an aromatic diisocyanate and 5 to 60% by weight of an aliphatic diisocyanate are used as the polyisocyanates.

4. A process as claimed in claim 1, characterized in that, where the polymers are prepared in a phenolic solvent, the reaction solution is additionally kept at a temperature of 200 to 250 °C for 0.5 to 10 hours after polymerization.

5. The use of the polyamideimides produced by the process claimed in claim 1 for injection moulding and extrusion.

## Revendications

1. Procédé de production de polyamide-imides solubles dans le crésol à partir de polyisocyanates, d'anhydrides d'acides polycarboxyliques cycliques, de lactames et/ou de polyamides, caractérisé en ce qu'on produit les polyamide-imides dans une première étape par un procédé connu dans un solvant, puis on les concentre et on les condense dans une extrudeuse à concentration par évaporation à des températures de 240 à 400 °C sous vide, ou sous azote, sous réserve que la production ou le traitement final ne soit pas effectué en présence de 0,2 a 15% en poids d'un phénol ou d'un mélange de phénols substitués une ou plusieurs fois avec des restes alkyle ayant 1 à 20 atomes de carbone et/ou avec des restes cycloalkyle et/ou avec des restes aryle ayant 6 à 12 atomes de carbone, auquel cas en la seule présence de substituants alkyle, ces derniers doivent avoir au total au moins 2 atomes de carbone, et sous réserve que soient exclus des polymères qui contiennent 0,1 à 20% en poids d'un lactame ou de mélanges de lactames de formule

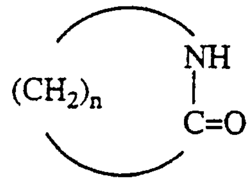

dans laquelle n est un nombre entier de 4 à 18.

2. Procédé suivant la revendication 1, caractérisé en ce qu'on utilise comme anhydride d'acide polycarboxylique l'anhydride d'acide trimellitique.

3. Procédé suivant la revendication 1, caractérisé en ce qu'on utilise comme polyisocyanates des mélanges de 40 à 95% en poids d'un diisocyanate aromatique et de 5 à 60% en poids d'un diisocyanate aliphatique.

4. Procédé suivant la revendication 1, caractérisé en ce que lorsqu'on produit les polymères dans un solvant phénolique, on maintient après la polymérisation la solution réactionnelle pendant encore 0,5 à 10 heures à une température de 200 à 250° C.

5. Utilisation des polyamide-imides produits selon la revendication 1 pour le moulage par injection et l'extrusion.